# EUROPÄISCHE PATENTSCHRIFT

(11) **EP 0 977 658 B1**
(45) Veröffentlichungstag und Bekanntmachung des Hinweises auf die Patenterteilung: **16.10.2002**
(21) Anmeldenummer: 98916613.7
(22) Anmeldetag: 20.04.1998
(51) Int. Cl.: B29C 47/38, B29C 47/68, B29C 47/74

(54) **VERFAHREN UND VORRICHTUNG ZUR ÜBERWACHUNG DES ABNÜTZUNGSGRADES EINER EIN PLASTIFIZIERTES MATERIAL FÖRDERNDEN DICHTSCHNECKE**
PROCESS AND DEVICE FOR MONITORING THE DEGREE OF WEAR OF A COMPRESSION WORM CONVEYING PLASTICIZED MATERIAL
PROCEDE ET DISPOSITIF POUR LA SURVEILLANCE DU DEGRE D'USURE D'UNE VIS DE COMPRESSION TRANSPORTANT UN MATERIAU PLASTIFIE

(30) Priorität: 23.04.1997 AT 69397
(43) Veröffentlichungstag der Anmeldung: 09.02.2000
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9800102
(87) Internationale Veröffentlichungsnummer: WO98047687

(56) Entgegenhaltungen:
- WO-A-93/04841
- WO-A-94/29097
- US-A- 3 360 824
- US-A- 4 708 616
- PATENT ABSTRACTS OF JAPAN vol. 018, no. 115 (M-1566), 24.Februar 1994 & JP 05 309721 A (JAPAN STEEL WORKS LTD:THE), 22.November 1993,
- PATENT ABSTRACTS OF JAPAN vol. 018, no. 272 (M-1610), 24.Mai 1994 & JP 06 047797 A (SEKISUI CHEM CO LTD), 22.Februar 1994,
- PATENT ABSTRACTS OF JAPAN vol. 012, no. 386 (M-754), 14.Oktober 1988 & JP 63 139705 A (MITSUBISHI HEAVY IND LTD), 11.Juni 1988,

## Beschreibung

Die Erfindung bezieht sich auf ein Verfahren zur Überwachung des Abnützungsgrades einer ein plastifiziertes Material, insbesondere Kunststoff, gegen einen Widerstandskörper fördernden Dichtschnecke, die in einem Schneckengehäuse zwischen zwei in axialem Abstand voneinander angeordneten Schneckenabschnitten gelagert ist und deren Gewindesteigung jener der beiden Schneckenabschnitte entgegengesetzt gerichtet ist, wobei die Gehäuse der beiden Schneckenabschnitte durch einen das von den Schneckenabschnitten geförderte Material führenden Verbindungskanal verbunden sind, an welchen eine Station zur Behandlung des in ihm fließenden Materials angeschlossen ist, insbesondere eine Filterstation, wobei der Widerstandskörper zwischen der Dichtschnecke und der Stelle liegt, an welcher der Verbindungskanal vom Gehäuse jenes Schneckenabschnittes wegführt, der vom Material zuerst durchströmt wird. Weiters bezieht sich die Erfindung auf eine Vorrichtung zur Durchführung eines solchen Verfahrens.

Vorrichtungen zur Plastifizierung von Kunststoffmaterial, welche eine Dichtschnecke aufweisen, die in der zuvor beschriebenen Weise zwischen Schneckenabschnitten angeordnet ist, sind bekannt (WO 94/29097 A).

Alle in einem Schneckengehäuse gelagerten Schnecken und - wenngleich in wesentlich geringerem Maße - ihre Gehäuse unterliegen, auch bei bester Panzerung, einem Verschleiß, insbesondere solche Schnecken, welche ein mit abrasiven Bestandteilen versetztes Material fördern, z. B. mehr oder weniger verschmutztes, vorwiegend thermoplastisches, Kunststoffmaterial aus der Recycling-Branche. Bei Schnecken, welche gegen einen Extruderkopf fördern, hat der erwähnte Verschleiß zur Folge, daß der für eine einwandfreie Extrusion des Materiales erforderliche Druck vor dem Extruderkopf nicht mehr verläßlich aufgebaut werden kann, da das Material in den durch den Verschleiß bedingten Umfangsspalten zwischen Schnecke und Gehäuse in unkontrollierbarer Weise zurückrutscht. Besonders unangenehm ist der erwähnte Verschleiß bei Dichtschnecken, welche in der eingangs beschriebenen Weise zwischen zwei Schneckenabschnitte eingeschaltet sind. Hiebei ist diese Dichtschnecke durch den eine Umgehung der Dichtschnecke bildenden Verbindungskanal überbrückt. Ein Verschleiß im Bereich der Dichtschnecke, welcher schleichend auftritt, macht sich durch eine allmähliche Verschmutzung des der Weiterverarbeitung, insbesondere einem Extruderkopf zugeführten Materiales bemerkbar, sodaß auch das Endprodukt, in der Regel am Extruderkopf gewonnenes Granulat, verschmutzt ist. Dies führt zu Reklamationen der Endverarbeiter des Granulates. Verschmutztes Granulat verliert nicht nur an Wert, sondern es muß unter Umständen die Granulatproduktion von Wochen einem zweiten thermischen Filterprozeß unterzogen werden, was wiederum den Nachteil mit sich bringt, daß durch die zweite erforderliche Wärmebehandlung unnötig Energie vergeudet und die Molekülketten des Kunststoffmateriales geschädigt werden.

Um diese Schwierigkeiten zu vermeiden, müßte in regelmäßigen Abständen die Dichtschnecke ausgebaut und sowohl das Gehäuse als auch die Schnecke auf den Verschleiß hin geprüft werden. Diese Arbeiten werden jedoch - wie die Erfahrung gezeigt hat - kaum jemals durchgeführt, weil sie zeitaufwendig sind und von Fachkräften durchgeführt werden müssen, denn der Verschleiß im Bereich der Dichtschnecke kann sowohl an dieser selbst und zwar nicht nur in Bezug auf den Außendurchmesser der Schneckengänge, sondern auch in Bezug auf den Kerndurchmesser der Dichtschnecke auftreten, als auch am zylindrischen Schneckengehäuse.

Die Erfindung setzt sich nun zur Aufgabe, ein Verfahren zu schaffen, mit welchem die Überwachung des Abnutzungsgrades einer Dichtschnecke problemlos so möglich ist, daß jederzeit erkennbar ist, wie weit der Verschleiß der Schnecke bzw. gegebenenfalls auch ihres Schneckengehäuses fortgeschritten ist, und dies auch während der Produktion. Die Erfindung löst diese Aufgabe dadurch, daß der Druck des durch den vom Material zuerst durchströmten Schneckenabschnitt geförderten Materiales und der Druck des durch die Dichtschnecke geförderten Materiafes, jeweils vor dem Widerstandskörper, gemessen wird und daß die Differenz der beiden Drücke zur Anzeige des Abnützungsgrades ausgenützt wird. Die Erfindung geht hiebei von der Erkenntnis aus, daß der Druck auf das von der Schnecke geförderte Material in Förderrichtung der Schnecke, also gegen den Widerstand zu, immer mehr zunimmt, solange die Schnecke einwandfrei arbeitet. Bezeichnet man also den Druck an jener Meßstelle, welche vom geförderten Material zuerst erreicht wird, mit p₁ und den Meßdruck an der anderen Stelle mit p₂, dann ist die Schneckenfunktion einwandfrei, wenn p₂ größer ist als p₁. Gleichen sich beide Drücke p₁ und p₂ an, so bedeutet dies, daß die Abnützung schon weit fortgeschritten ist, was in der Regel bereits eine kritische Grenze darstellt. Wird p₂ kleiner als p₁, so ist die Funktion der Schnecke nicht mehr zufriedenstellend. Im normalen Arbeitsprozeß fördert nämlich die intakte Dichtschnecke immer einen kleinen Teil des über den Verbindungskanal dem zweiten Schneckenabschnitt zugeführten Materiales in Richtung zum ersten Schneckenabschnitt zurück. Bei einwandfreier Funktion der Dichtschnecke ist der Massedruck an jener Meßstelle, welche der Dichtschnecke näher liegt, stets größer als der Massedruck an der anderen Meßstelle. Gleichen sich beide Drücke an, so bedeutet das, daß sich die Dichtschnecke neutral verhält, d. h. es wird von der Dichtschnecke keine Kunststoffschmelze in Richtung zum ersten Schneckenabschnitt gefördert. Ist der Schmelzedruck an der der Dichtschnecke benachbarten Meßstelle kleiner als an der anderen Meßstelle, so bedeutet dies, daß die von der Dichtschnecke gebildete Dichtsektion in Richtung zum Extruderkopf oder zur sonstigen Auslaßöffnung mit ungefilterter Schmelze gleichsam überfahren wird. Die Dichtwirkung der Dichtschnecke ist daher nicht mehr in genügendem Maße gewährleistet und es werden im Endprodukt unbearbeitete, insbesondere ungefilterte Anteile des Materiales auftreten, denn die Dichtschnecke bildet dann einen unerwünschten Nebenschluß zum Verbindungskanal, welcher zur Behandlungsstation des geförderten Materiales, insbesondere zum Filter, führt.

Wenn im vorliegenden Zusammenhang von "Gewinde" die Rede ist, so sind hiemit die Schneckengänge gemeint.

Für Kunststoffvergleichsmessungen ist es bekannt, in einem an einen Schneckenabschnitt anschließenden, im Durchmesser verengten Rohrabschnitt den Massedruck an zwei im Abstand voneinander liegenden Stellen zu messen. Da dieser Rohrabschnitt im Durchmesser konstant ist, ist der Druck an der vom Kunststoffmaterial zuerst erreichten Stelle größer als an der anderen Stelle, verursacht durch die Wandreibung des Kunststoffmateriales an der Innenwand des Rohrabschnittes. Außerdem liegt hier keine der beiden Meßstellen im Bereich der Schneckengänge bzw. des Schneckengehäuses und die erhaltenen Meßergebnisse dienen lediglich zur Bestimmung der Eigenschaften des Kunststoffmateriales und nicht der Überwachung des Abnützungsgrades einer Schnecke.

Für die Überprüfung einer Filterdurchlässigkeit bei einer konventionellen Extruderanlage ist es bekannt (US 4,708,616 A), den Druck vor und nach dem Filter zu messen. Für die Lösung der Aufgabe, welche sich die Erfindung gestellt hat, ergibt sich hieraus keine Anregung.

Die erfindungsgemäße Vorrichtung zur Durchführung des erfindungsgemäßen Verfahrens geht aus von einer Konstruktion, bei welcher zwei voneinander in axialem Abstand angeordnete Schneckenabschnitte durch eine Dichtschnecke miteinander drehschlüssig verbunden sind. Die Erfindung kennzeichnet sich dadurch, daß eine Öffnung die Wand des Gehäuses des vom Material zuerst durchströmten Schneckenabschnittes im Bereich dessen Schneckengänge oder in einem daran unmittelbar anschließenden Bereich durchsetzt und eine weitere Öffnung die Wand dieses Gehäuses oder des Gehäuses der Dichtschnecke durchsetzt, wobei die beiden Öffnungen voneinander im Abstand liegen, gemessen in axialer Richtung der Schneckenabschnitte, und der Widerstandskörper im Bereich dieses Abstandes liegt, und daß an jede der beiden Öffnungen ein Druckfühler angeschlossen ist. Die Anzeigen dieser Druckfühler genügen an sich schon, um auf die zuvor erwähnte Weise den Abnützungsgrad der Schnecke bzw. ihres Gehäuses überwachen zu können. Günstiger ist es jedoch im Rahmen der Erfindung, wenn an die Druckfühler Wandler angeschlossen sind, die an ihrem Ausgang eine elektrische Größe an eine Vergleichsschaltung abgeben, an deren Ausgang ein Anzeigegerät angeschlossen ist. Diese Vergleichsschaltung überwacht laufend die erwähnte Druckdifferenz von p₁ und p₂ und zeigt sie mittels des Anzeigegerätes an. Das Anzeigegerät kann in bekannter Weise so ausgebildet sein, daß es ein Warnsignal abgibt, sobald die erwähnte Druckdifferenz einen vorbestimmten Wert unterschreitet. Das Warnsignal kann akustisch oder optisch sein und gegebenenfalls auch unmittelbar zur Stillegung der Anlage ausgenützt werden.

Besonders günstig ist es, wenn gemäß einer Weiterbildung der Erfindung zumindest eine der beiden Öffnungen in der Wand des Schneckengehäuses von einem an die Schneckengänge des Schneckenabschnittes bzw. der Dichtschnecke anschließenden Ringkanal wegführt. Dies hat den Vorteil, daß das Meßergebnis des an die betreffende Öffnung angeschlossenen Druckfühlers pulsationsfrei ist.

Gemäß einer Weiterbildung der Erfindung kann der Widerstandskörper von einem zwischen den beiden Öffnungen angeordneten Staukörper gebildet sein, der auf einer die Schneckenabschnitte mit der Dichtschnecke verbindenden Welle vorgesehen ist. Dies ergibt eine einfache Bauweise, zumal dieser Staukörper in verschiedenster Weise ausgebildet werden kann. Die einfachste Ausführungsform besteht darin, daß der Staukörper eine Scheibe ist, zwischen deren Umfang und der Wand des Gehäuses der Dichtschnecke ein schmaler Ringspalt besteht. Eine Weiterbildung dieser Konstruktion kann erfindungsgemäß dadurch gebildet sein, daß am Umfang der Scheibe zumindest eine Ringnut vorhanden ist. Diese Ringnut verursacht Wirbel in dem an ihr vorbeiströmenden plastifizierten Material, was eine Erhöhung des Widerstandes für dieses Material bedeutet. Eine Alternative hiezu kann im Rahmen der Erfindung dadurch gebildet sein, daß der Staukörper ein Gewindeabschnitt ist, dessen Gewindegänge die gleiche Förderrichtung haben wie die Schneckengänge der Dichtschnecke, jedoch feiner sind. Dieses Feingewinde kann nicht das gesamte Material fördern, welches vom vergleichsweise gröberen Gewinde der Dichtschnecke angeliefert wird. Die Differenzmenge des von der Dichtschnecke geförderten Materiales wird daher über das Feingewinde "überschoben", d.h. an den Gewindegängen des Feingewindes vorbeigedrückt, was eine Erhöhung des Druckes am Ende der Dichtschnecke bewirkt.

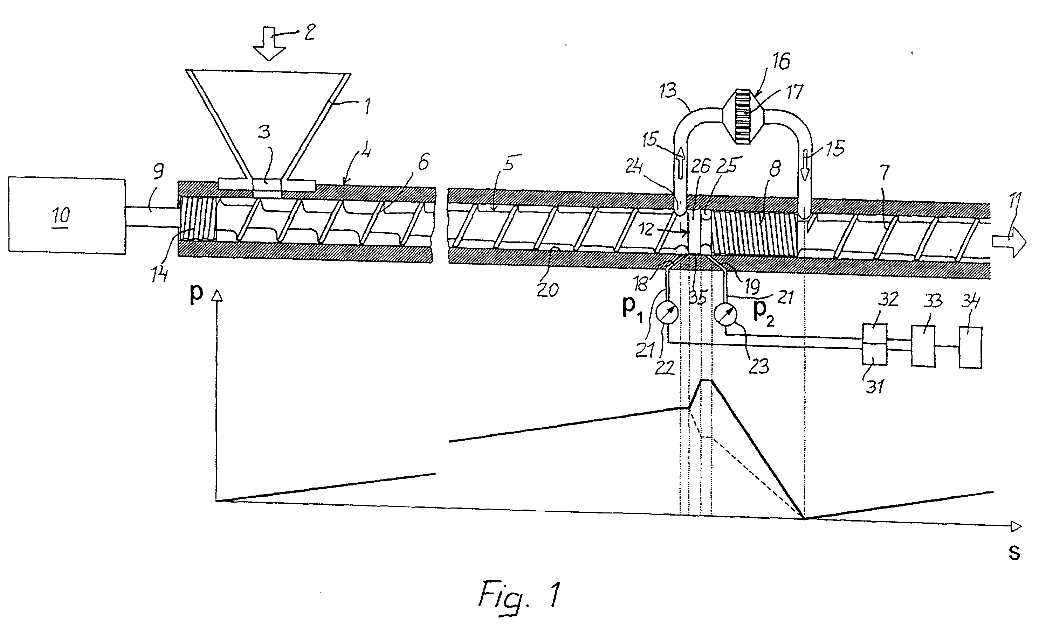

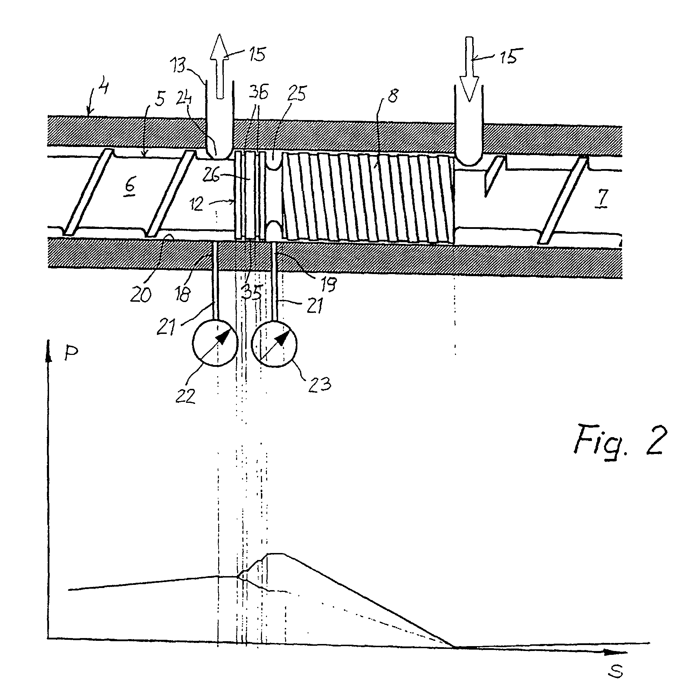

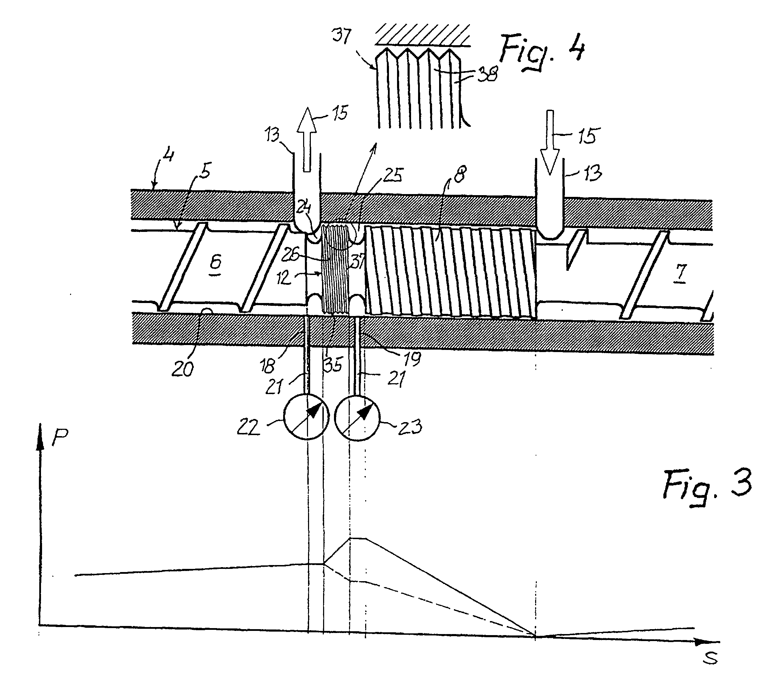

In der Zeichnung ist der Erfindungsgegenstand anhand von Ausführungsbeispielen schematisch veranschaulicht. Fig. 1 zeigt einen Längsschnitt durch eine erste Ausführungsform einer mit einer Dichtschnecke versehenen Vorrichtung, wobei der zu dieser Vorrichtung zugehörige Massedruckverlauf in Diagrammform dargestellt ist. Fig. 2 zeigt eine erste Ausführungsvariante hiezu, ebenfalls mit zugehörigem Massedruckdiagramm und Fig. 3 zeigt ein weiteres Ausführungsbeispiel, ebenso mit zugehörigem Massedruckdiagramm. Fig. 4 zeigt ein Detail der Fig. 3 in größerem Maßstab.

Bei der Vorrichtung nach Fig. 1 wird das zu verarbeitende Material, insbesondere verschmutztes, thermoplastisches Kunststoffmaterial, herrührend von Abfallprodukten, gegebenenfalls nach einer Vorzerkleinerung, in einen Trichter 1 in Richtung des Pfeiles 2 eingefüllt und gelangt so durch eine Einzugsöffnung 3 in das Innere eines Schneckengehäuses 4, in welchem eine Schnecke 5 gelagert ist. Diese Schnecke 5 hat zwei voneinander in axialem Abstand angeordnete Abschnitte 6, 7, zwischen denen eine Dichtschnecke 8 angeordnet ist, deren Steigung der Schneckengänge entgegengesetzt gerichtet ist der Steigung der Schneckengänge der beiden Abschnitte 6, 7. Die beiden Schneckenabschnitte 6, 7 und die Dichtschnecke 8 sitzen auf einer gemeinsamen Welle 9, die durch einen Motor 10 so verdreht wird, daß das durch die Einfüllöffnung 3 eingezogene Material von den beiden Schneckenabschnitten 6, 7 in Richtung des Pfeiles 11 gefördert wird, z. B. zu einem Extruderkopf. Zweckmäßig haben die beiden Schneckenabschnitte 6, 7 und die Dichtschnecke 8 gleichen Außendurchmesser der Schneckengänge, was den Vorteil hat, daß das alle diese Schnecken lagernde Gehäuse 4 durchgehend mit konstantem Innendurchmesser ausgebildet werden kann. Am Einzugsende der Schnecke 5 ist ein Dichtgewinde 14 mit im Vergleich zu den Schneckenabschnitten 6, 7 verringerter Steigung und verringerter Ganghöhe vorgesehen.

Zur Umgehung der Dichtschnecke 8 ist ein Verbindungskanal 13 vorgesehen, welcher die den Schneckenabschnitten 6 und 7 zugeordneten Gehäuseabschnitte zu beiden Seiten der Dichtschnecke 8 durchsetzt und in welchem das von den Schneckenabschnitten 6, 7 geförderte Material in Richtung der Pfeile 15 strömt. In den Verbindungskanal 13 ist eine Station 16 zur Behandlung des im Verbindungskanal 13 strömenden Materiales eingeschaltet. Diese Behandlung kann verschiedenster Art sein, z.B. eine Zugabe von Füllstoffen, Farbstoffen oder sonstigen Beimengungen. In den meisten Fällen, gegebenenfalls zusätzlich zu den zuvor beschriebenen Möglichkeiten, ist die Station 16 als Filterstation 17 ausgebildet, deren Filter die Verunreinigungen, insbesondere Feststoffkörper aller Art, aus dem plastifizierten Kunststoffmaterial ausfiltert, sodaß gereinigtes Kunststoffmaterial aus dem Verbindungskanal 13 in den den Schneckenabschnitt 7 umgebenden Abschnitt des Gehäuses 4 eintritt und vom Schneckenabschnitt 7 zum Auslass, insbesondere zum Extruderkopf gefördert wird. Wie ersichtlich, ist die Reinheit des vom Schneckenabschnitt 7 zum Extruderkopf geförderten Materiales jedoch von der Dichtfunktion der Dichtschnecke 8 abhängig. Läßt diese Dichtfunktion zu wünschen übrig, etwa infolge Verschleißes der Dichtschnecke 8 und/oder ihres Gehäuses, so ist keine einwandfreie Dichtung zwischen den beiden Schneckenabschnitten 6, 7 mehr gegeben, sodaß vom Schneckenabschnitt 6 gefördertes, verschmutztes Material zum Schneckenabschnitt 7 gelangt, ohne den Verbindungskanal 13 und das in ihn eingesetzte Filter passiert zu haben. Dies bedeutet, daß ungefiltertes, also verschmutztes Material vom Schneckenabschnitt 7 zum Extruderkopf oder zum sonstigen Auslaß gefördert wird und sich letztlich durch eine Verschmutzung des produzierten Endproduktes, in der Regel Granulat, bemerkbar macht. Handelt es sich bei der Station 16 nicht oder nicht ausschließlich um eine Filterstation 17, sondern z.B. um eine Beimengung von Zusatzstoffen, dann ist das gewünschte Mischungsverhältnis des zum Extruderkopf oder dergleichen geführten Materiales nicht verläßlich einzuhalten, sondern abhängig vom Dichtungsverhalten der Dichtschnecke 8.

Um die Dichtwirkung der Dichtschnecke 8 laufend zu überprüfen, sind zwei Öffnungen 18, 19 vorgesehen, welche die Wand 20 des Schneckengehäuses 4 durchsetzen und in Abstand voneinander, gemessen in Achsrichtung des Gehäuses 4, angeordnet sind. Die eine Öffnung 18 liegt im Bereiche des Endes der Schneckengänge des Schneckenabschnittes 6 bzw. unmittelbar anschließend daran, die andere Öffnung 19 ist in bezug auf die Öffnung 18 in Richtung des Pfeiles 11 versetzt und in einem an die Schneckengänge des Schneckenabschnittes 6 anschließenden Bereich des Gehäuses 4 angeordnet, jedoch noch vor der Dichtschnecke 8, gesehen in Richtung des Pfeiles 11. An jede der beiden Öffnungen 18, 19 ist mittels Druckleitungen 21 ein Druckfühler 22 bzw. 23 angeschlossen. Durch diese beiden Druckfühler 22, 23 ist also der Druck des von der Vorrichtung geförderten Materiales an der jeweiligen Stelle meßbar. Zwischen den beiden Öffnungen 18, 19 liegt ein auf die Welle 9 aufgesetzter Widerstandskörper 12, welcher bei dieser Ausführungsform von einem scheibenförmigen Staukörper 26 gebildet ist, zwischen. dessen Umfang und der Innenwand des den Widerstandskörper 12 aufnehmenden Gehäuseabschnittes ein schmaler Ringspalt 35 besteht, durch welchen das von der Dichtschnecke 8 geförderte Material in den Gehäuseabschnitt des Schneckenabschnittes 6 eintreten kann. Dieser Staukörper 26 trägt kein Gewinde und dient dazu, einen erhöhten Widerstand für das von der Dichtschnecke 8 geförderte Material zu bilden, welcher Widerstand von der Dichtschnecke 8 überwunden werden muß.

Eine intakte Dichtschnecke 8 fördert somit im normalen Arbeitsprozeß stets einen kleinen Anteil des gefilterten Materiales wieder zurück (entgegen der Pfeilrichtung 11) in das Gehäuse des Schneckenabschnittes 6. Der Widerstandskörper 12 bewirkt, daß der Massedruck p₂, welchen der Druckfühler 23 abfühlt, bei einwandfreier Funktion der Dichtschnecke 8 immer größer ist als der Massedruck p₁, welchen der Druckfühler 22 abfühlt. Der Differenzwert p₂ - p₁ ist daher ein Wert, aus welchem auf den Dichtzustand der Dichtschnecke 8 rückgeschlossen werden kann. Gleichen sich die beiden Drücke p₂ und p₁ an, so bedeutet dies, daß sich die Dichtschnecke neutral verhält, d. h. es wird keine Kunststoffschmelze von der Dichtschnecke 8 entgegen der Pfeilrichtung 11 gefördert. Wird p₂ kleiner als p₁, so bedeutet das, daß die von der Dichtschnecke 8 gebildete Dichtsektion in Extrusionsrichtung (Pfeil 11) von ungefilterter Kunststoffschmelze passiert wird. Die Dichtwirkung ist dann nicht mehr gewährleistet und das Endprodukt wird in unzulässiger Weise verschmutzt.

Fig. 1 zeigt auch den Verlauf des Druckes p in Abhängigkeit von der in Achsrichtung der Schnecke 5 gemessenen Weglänge s in Diagrammform. Mit vollen Linien ist der Druckverlauf im Idealzustand der Dichtschnecke eingezeichnet, mit strichlierten Linien ein Zustand, bei welchem die Dichtschnecke von ungefiltertem, plastifiziertem Kunststoffmaterial in Richtung des Pfeiles 11 "überfahren" wird. Es ist ersichtlich, daß die Förderwirkung der Dichtschnecke 8 gegen den Widerstandskörper 12 bei intakter Dichtschnecke einen Druckwert am förderseitigen Ende der Dichtschnecke 8, also an der Öffnung 19, zur Folge hat, welcher höher ist als der Druck an allen anderen Stellen der Anlage, insbesondere an jenen Stellen der Vorrichtung, welche, gesehen in Richtung des Pfeiles 11, vor der Öffnung 19 liegen. Bei unzulässig großen Abnützungen der Dichtschnecke 8 bzw. des sie umgebenden Gehäuseabschnittes fällt jedoch der Druck an der Öffnung 19 so stark ab, daß dieser Druck nicht mehr größer ist als der Druck an der Öffnung 18, sondern geringer.

Es ist zweckmäßig, im Bereich der beiden Öffnungen 18, 19 je einen von Schneckengängen freien Ringkanal 24 bzw. 25 anzuordnen, um die Meßergebnisse der beiden Druckfühler 22, 23 unabhängig zu machen von den über die Schneckengänge eingebrachten Pulsationen.

An die beiden Druckfühler 22, 23 können Wandler 31, 32 (Fig. 1) angeschlossen sein, welche die von den Druckfühlern 22, 23 ermittelten Druckwerte in elektrische Größen umsetzen. Der Ausgang der beiden Wandler 31, 32 ist an eine Vergleichsschaltung 33 angeschlossen, welche in an sich bekannter Weise die beiden von den Wandlern 31, 32 gelieferten elektrischen Signale miteinander vergleicht und die Differenz der beiden Signalwerte an einem Anzeigegerät 34 optisch und/oder akustisch darstellt. Das von der Vergleichsschaltung 33 gelieferte Signal kann auch dazu ausgenutzt werden, die Vorrichtung automatisch stillzusetzen, wenn sich ein ein vorbestimmtes Maß übersteigender Abnützungsgrad bemerkbar macht.

Die Ausführungsform nach Fig. 2 unterscheidet sich von jener nach Fig. 1 lediglich dadurch, daß am Umfang des von einem scheibenförmigen Staukörper 26 gebildeten Widerstandskörpers 12 zwei Ringnuten 36 vorgesehen sind, die in das im Spalt 35 strömende Material Wirbel hineintragen und dadurch den Widerstand für den Durchfluß im Spalt 35 vergrößern. Ansonsten entspricht die Vorrichtung nach Fig. 2 jener nach Fig. 1, die an die beiden Druckfühler 22,23 angeschlossenen Bauteile sind in Fig. 2 der Einfachheit halber nicht dargestellt, ebenso nicht die Station 16.

Auch in Fig. 2 ist wieder der Druckverlauf in der Vorrichtung in Diagrammform dargestellt, wobei wieder eine volle Linie den Druckverlauf bei intakter Dichtschnecke 8 angibt, wogegen die strichlierte Linie die Verhältnisse bei mangelnder Funktion der Dichtschnecke 8 angibt.

Die Ausführungsform nach den Fig. 3 und 4 unterscheidet sich von jenen nach den Fig. 1 und 2 dadurch, daß der Staukörper 26 an seinem Umfang mit einem Feingewinde 37 versehen ist. Dieses Feingewinde 37 hat zwar die gleiche Steigungsrichtung wie das Gewinde bzw. die Schneckengänge der Dichtschnecke 8, ist jedoch viel feiner als letzteres Gewinde ausgebildet. Das Feingewinde 37 ist daher nicht in der Lage, das gesamte von der Dichtschnecke 8 entgegen der Pfeilrichtung 11 geförderte Material in Richtung zum Schneckenabschnitt 6 weiter zu transportieren. Ein Anteil dieses Materiales wird daher durch den Ringspalt 35 entlang der Gewindegänge 38 (Fig. 4) des Feingewindes 37 nach links (Fig. 3) transportiert, sodaß das Feingewinde 37 sozusagen "überfahren" wird. Der hiedurch hervorgerufene Widerstand für das von der Dichtschnecke 8 geförderte Material bewirkt - bei einwandfrei arbeitender Dichtschnecke 8 - den in dem Diagramm mit vollen Linien dargestellten Druckverlauf, welcher sich auf die mit strichlierten Linien gezeigte Darstellung ändert, wenn die Dichtschnecke 8 und/oder ihr Gehäuseabschnitt einen stärkeren Verschleiß zeigen.

## Patentansprüche

1. Verfahren zur Überwachung des Abnützungsgrades einer ein plastifiziertes Material, insbesondere Kunststoff, gegen einen Widerstandskörper (12) fördernden Dichtschnecke (8), die in einem Schneckengehäuse (4) zwischen zwei in axialem Abstand voneinander angeordneten Schneckenabschnitten (6,7) gelagert ist und deren Gewindesteigung jener der beiden Scheckenabschnitte (6,7) entgegengesetzt gerichtet ist, wobei die Gehäuse (4) der beiden Schneckenabschnitte (6, 7) durch einen das von den Schneckenabschnitten (6, 7) geförderte Material führenden Verbindungskanal (13) verbunden sind, an welchen eine Station (16) zur Behandlung des in ihm fließenden Materiales angeschlossen ist, insbesondere eine Filterstation (17), wobei der Widerstandskörper (12) zwischen der Dichtschnecke (8) und der Stelle liegt, an welcher der Verbindungskanal (13) vom Gehäuse (4) jenes Schneckenabschnittes (6) wegführt, der vom Material zuerst durchströmt wird, **dadurch gekennzeichnet, daß** der Druck des von letzterem Schneckenabschnitt (6) geförderten Materiales und der Druck des von der Dichtschnecke (8) geförderten Materiales, jeweils vor dem Widerstandskörper (12), gemessen wird und daß die Differenz der beiden Drücke zur Anzeige des Abnützungsgrades ausgenützt wird.

2. Vorrichtung zur Durchführung des Verfahrens nach Anspruch 1, wobei zwei voneinander in axialem Abstand angeordnete Schneckenabschnitte (6, 7) durch eine Dichtschnecke (8) miteinander drehschlüssig verbunden sind, **dadurch gekennzeichnet, daß** eine Öffnung (18) die Wand (20) des Gehäuses (4) des vom Material zuerst durchströmten Schneckenabschnittes (6) im Bereich dessen Schneckengänge oder in einem daran unmittelbar anschließenden Bereich durchsetzt und eine weitere Öffnung die Wand (20) dieses Gehäuses (4) oder des Gehäuses der Dichtschnecke (8) durchsetzt, wobei die beiden Öffnungen (18,19) voneinander im Abstand liegen, gemessen in axialer Richtung der Schneckenabschnitte (6, 7) und der Widerstandskörper (12) im Bereiche dieses Abstandes liegt, und daß an jede der beiden Öffnungen (18, 19) ein Druckfühler (22, 23) angeschlossen ist.

3. Vorrichtung nach Anspruch 2, **dadurch gekennzeichnet, daß** an die Druckfühler (22, 23) Wandler (31, 32) angeschlossen sind, die an ihrem Ausgang eine elektrische Größe an eine Vergleichsschaltung (33) abgeben, an deren Ausgang ein Anzeigegerät (34) angeschlossen ist.

4. Vorrichtung nach Anspruch 2 oder 3, **dadurch gekennzeichnet, daß** zumindest eine der beiden Öffnungen (18, 19) in der Wand (20) des Schneckengehäuses (4) von einem an die Schneckengänge des Schneckenabschnittes (6) bzw. der Dichtschnecke (8) anschließenden Ringkanal (24, 25) wegführt.

5. Vorrichtung nach einem der Ansprüche 2 bis 4, **dadurch gekennzeichnet, daß** der Widerstandskörper (12) von einem zwischen den beiden Öffnungen (18, 19) angeordneten Staukörper (26) gebildet ist, der auf einer die Schneckenabschnitte (6, 7) mit der Dichtschnecke (8) verbindenden Welle (9) vorgesehen ist.

6. Vorrichtung nach Anspruch 5, **dadurch gekennzeichnet, daß** der Staukörper (26) eine Scheibe ist, zwischen deren Umfang und der Wand (20) des Gehäuses der Dichtschnecke (8) ein schmaler Ringspalt (35) besteht.

7. Vorrichtung nach Anspruch 6, **dadurch gekennzeichnet, daß** am Umfang der Scheibe zumindest eine Ringnut (36) vorhanden ist.

8. Vorrichtung nach Anspruch 5, **dadurch gekennzeichnet, daß** am Staukörper (26) ein Gewindeabschnitt (37) vorgesehen ist, dessen Gewindegänge die gleiche Förderrichtung haben wie die Schneckengänge der Dichtschnecke (8), jedoch feiner sind.

9. Vorrichtung nach einem der Ansprüche 2 bis 8, **dadurch gekennzeichnet, daß** die beiden Schneckenabschnitte (6, 7) gleichen Außendurchmesser der Schneckengänge haben.

10. Vorrichtung nach einem der Ansprüche 2 bis 9, **dadurch gekennzeichnet, daß** die Dichtschnecke (8) einen Außendurchmesser der Schneckengänge hat, welcher dem Außendurchmesser der Schneckengänge zumindest des einen der beiden Schneckenabschnitte (6, 7) gleich ist.

## Claims

1. A method of monitoring the degree of wear of a compression screw (8) conveying a plasticised material, in particular plastics, towards a baffle (12), the compression screw (8) being mounted in a screw housing (4) between two axially spaced screw portions (6, 7) and having a thread running in the opposite direction to that of the two screw portions (6, 7), wherein the housings (4) of the two screw portions (6, 7) are connected by a connecting channel (13) which carries the material conveyed by the screw portions (6, 7) and to which a station (16) for treatment of the material flowing in the connecting channel (13) is connected, in particular a filter station (17), wherein the baffle (12) is located between the compression screw (8) and the point at which the connecting channel (13) leads away from the housing (4) of that screw portion (6) through which the material first flows, **characterised in that** the pressure of the material conveyed by the latter screw portion (6) and the pressure of the material conveyed by the compression screw (8) is in each case measured upstream of the baffle (12), and **in that** the difference between the two pressures is used as an indication of the degree of wear.

2. A device for carrying out the method according to claim 1,
wherein two axially spaced screw portions (6, 7) are rotatably connected to one another by a compression screw (8), **characterised in that** an opening (18) extends through the wall (20) of the housing (4) of the screw portion (6), through which the material first flows, in the region of its screw turns or in a region directly adjacent thereto, and a further opening extends through the wall (20) of this housing (4) or the housing of the compression screw (8), the two openings (18, 19) being spaced apart in the axial direction of the screw portions (6, 7), and the baffle (12) lying within this space, and **in that** a pressure sensor (22, 23) is connected to each of the two openings (18, 19).

3. A device according to claim 2, **characterised in that** converters (31, 32) are connected to the pressure sensors (22, 23) and at their output transmit an electrical value to a comparator circuit (33), to the output of which is connected a display device (34).

4. A device according to claim 2 or 3, **characterised in that** at least one of the two openings (18, 19) in the wall (20) of the screw housing (4) leads away from an annular channel (24, 25) adjacent to the screw turns of the screw portion (6) and the compression screw (8) respectively.

5. A device according to any one of claims 2 to 4, **characterised in that** the baffle (12) is formed by a retaining member (26) arranged between the two openings (18, 19) and provided on a shaft (9) connecting the screw portions (6, 7) to the compression screw (8).

6. A device according to claim 5, **characterised in that** the retaining member (26) is a disc, between the circumference of which and the wall (20) of the housing of the compression screw (8) a narrow annular gap (35) is formed.

7. A device according to claim 6, **characterised in that** at least one annular groove (36) is provided on the circumference of the disc.

8. A device according to claim 5, **characterised in that** a threaded portion (37) is provided on the retaining member (26), the turns of the threaded portion (37) having the same feed direction as the screw turns of the compression screw (8), but being finer.

9. A device according to any one of claims 2 to 8, **characterised in that** the screw turns of the two screw portions (6, 7) have the same outer diameter.

10. A device according to any one of claims 2 to 9, **characterised in that** the screw turns of the compression screw (8) have an outer diameter which is equal to the outer diameter of the screw turns of at least one of the two screw portions (6, 7).

## Revendications

1. Procédé pour la surveillance du degré d'usure d'une vis sans fin d'étanchéité (8) transportant un matériau plastifié, notamment une matière plastique, vers un corps de résistance (12), qui est montée dans un carter de vis sans fin (4) entre deux tronçons de vis sans fin (6, 7) disposés à distance axiale l'un de l'autre et dont le pas de vis est de direction opposée à celui des deux tronçons de vis sans fin (6, 7), les carters (4) des deux tronçons de vis sans fin (6, 7) étant reliés par un canal de liaison (13) dirigeant le matériau transporté par les tronçons de vis sans fin (6, 7) et auquel est raccordé un poste de traitement (16) du matériau s'écoulant dans ce canal, notamment un poste de filtration (17), le corps de résistance (12) se trouvant entre la vis sans fin d'étanchéité (8) et l'endroit où le canal de liaison (13) part du carter (4) du tronçon de vis sans fin (6) traversé en premier par le flux de matériau, **caractérisé en ce qu'**on mesure la pression du matériau transporté par le tronçon de vis sans fin précité (6) et la pression du matériau transporté par la vis sans fin d'étanchéité (8), chaque fois avant le corps de résistance (12), et **en ce qu'**on se sert de la différence des deux pressions pour afficher le degré d'usure.

2. Dispositif pour la mise en oeuvre du procédé selon la revendication 1, deux tronçons de vis sans fin (6, 7) disposés à distance axiale l'un de l'autre étant reliés en solidarité de rotation par une vis sans fin d'étanchéité (8), **caractérisé en ce qu'**une ouverture (18) traverse la paroi (20) du carter (4) du tronçon de vis sans fin (6) traversé en premier par le flux de matériau dans la région des spires de ce tronçon ou dans une région faisant immédiatement suite à ces spires, et une autre ouverture (19) traverse la paroi (20) de ce carter (4) ou du carter de la vis sans fin d'étanchéité (8), les deux ouvertures (18, 19) se trouvant à distance mutuelle, mesurée dans la direction axiale des tronçons de vis sans fin (6, 7), et le corps de résistance (12) se trouvant dans la région de cette distance, et **en ce qu'**un capteur de pression (22, 23) est raccordé à chacune des deux ouvertures (18, 19).

3. Dispositif selon la revendication 2, **caractérisé en ce que** des transducteurs (31, 32) sont raccordés aux capteurs de pression (22, 23) et délivrent à leur sortie une grandeur électrique à un circuit comparateur (33), à la sortie duquel est raccordé un appareil d'affichage (34).

4. Dispositif selon la revendication 2 ou 3, **caractérisé en ce qu'**au moins une des deux ouvertures (18, 19) pratiquées dans la paroi (20) du carter de vis sans fin (4) part d'un canal annulaire (24, 25) faisant suite aux spires du tronçon de vis sans fin (6) ou respectivement de la vis sans fin d'étanchéité (8).

5. Dispositif selon l'une des revendications 2 à 4, **caractérisé en ce que** le corps de résistance (12) est formé par un corps d'accumulation (26) disposé entre les deux ouvertures (18, 19), qui est prévu sur un arbre (9) reliant les tronçons de vis sans fin (6, 7) à la vis sans fin d'étanchéité (8).

6. Dispositif selon la revendication 5, **caractérisé en ce que** le corps d'accumulation (26) est un disque, une étroite fente annulaire (35) étant présente entre la circonférence du disque et la paroi (20) du carter de la vis sans fin d'étanchéité (8).

7. Dispositif selon la revendication 6, **caractérisé en ce qu'**au moins une rainure annulaire (36) est présente sur la circonférence du disque.

8. Dispositif selon la revendication 5, **caractérisé en ce qu'**une partie filetée (37) est prévue sur le corps d'accumulation (26) et ses filets ont la même direction de transport que les spires de la vis sans fin d'étanchéité (8), mais sont plus fins.

9. Dispositif selon l'une des revendications 2 à 8, **caractérisé en ce que** les deux tronçons de vis sans fin (6, 7) possèdent des spires de même diamètre extérieur.

10. Dispositif selon l'une des revendications 2 à 9, **caractérisé en ce que** la vis sans fin d'étanchéité (8) possède des spires dont le diamètre extérieur est égal au diamètre extérieur des spires d'au moins l'un des deux tronçons de vis sans fin (6, 7).
